# DEMANDE DE BREVET EUROPEEN

(11) **EP 4 382 399 A1**
(43) Date de publication de la demande: **12.06.2024**
(21) Numéro de dépôt: 23204390.1
(22) Date de dépôt: 18.10.2023
(51) Int. Cl.: B62D 25/08, B62D 21/15, B62D 41/00

(54) **BRANCARD POUR VÉHICULE AUTOMOBILE COMPRENANT UN ÉLÉMENT DE RENFORT INTERNE**

(30) Priorité: 22.11.2022 FR 2212133
(71) Demandeur: Stellantis Auto SAS, 78300 Poissy (FR)
(72) Inventeur: OUSSAADA, ABDELKRIM, 20280 CASABLANCA (MA)

(57) **Abrégé**

L'invention concerne un brancard pour véhicule automobile comprenant une partie avant (2) comportant une platine (3) fixée sur un dispositif d'absorption de choc, un premier orifice de déformation (5) formé sur une première paroi (7) de la partie avant (2) et un deuxième orifice de déformation (6) formé sur une deuxième paroi de la partie avant (2), opposée à la première paroi, la partie avant du brancard logeant un élément de renfort (9) s'étendant depuis la platine jusqu'aux orifices de déformation, l'élément de renfort comprenant une base prolongée par une première zone d'extension (13) et par une deuxième zone d'extension (14), positionnées l'une en regard de l'autre, et longeant chacune à la fois une première bordure périphérique (15) délimitant le premier orifice de déformation et une deuxième bordure périphérique délimitant le deuxième orifice de déformation, de façon à ne pas les masquer.

## Description

La présente invention se rapporte à un brancard pour véhicule automobile et à un véhicule comprenant un tel brancard.

L'invention appartient au domaine des dispositifs pour absorber les chocs à l'avant des véhicules automobiles. Un véhicule automobile comporte habituellement, en avant de son habitacle, un groupe motopropulseur permettant sa propulsion et deux brancards généralement appelés brancards avants ou nez de brancard.

Les brancards sont généralement constitués d'une poutre métallique disposée selon un axe longitudinal du véhicule, de part et d'autre du groupe motopropulseur. Les brancards permettent de protéger les occupants du véhicule lors d'un choc frontal du véhicule avec un obstacle, en évitant l'intrusion du groupe motopropulseur dans l'habitacle du véhicule.

Chaque brancard comprend une partie avant tubulaire comportant une platine à une extrémité du brancard qui est fixée sur un dispositif d'absorption de choc. On connaît du document WO2015114228 un dispositif d'absorption de choc, disposé sur la partie avant d'un brancard d'un véhicule automobile, permettant d'absorber, par déformation plastique, l'énergie d'un choc avec un obstacle. Un tel dispositif est conçu pour se déformer avec un niveau d'effort prédéfini, fonction par exemple de la masse du véhicule.

Le brancard comprend également deux orifices de déformation opposés, formés sur deux parois opposées de la partie avant du brancard.

Dans certains véhicules, un élément de renfort est logé dans la partie avant du brancard. Il s'étend depuis la platine jusqu'aux orifices de déformation en les dépassant légèrement, sans les masquer.

Il existe des tests permettant de vérifier si le véhicule est réparable après un choc à l'avant du véhicule, dit choc de réparabilité avant. Le test consiste en l'impact du véhicule à 16 km/h contre une barrière rigide inclinée de 10° et avec un recouvrement de 40% entre le véhicule et l'obstacle, ce qui concentre l'énergie sur un seul brancard (gauche ou droit). Les véhicules présentant une masse inférieure à 1500 kg réussissent le test.

Cependant, les véhicules, tels les véhicules électriques, sont de plus en plus lourds à cause des batteries, avec une masse dépassant les 1,5 tonnes et voire les 2 tonnes.

La transmission d'effort du dispositif d'absorption de choc vers les brancards doit se faire de manière continue, sans coupure afin d'absorber l'énergie mise en jeu, sans déformer les brancards.

Avec cette masse importante, la conception de l'élément de renfort actuelle ne permet pas de préserver l'intégrité du brancard et de passer le test avec succès.

En effet, la transmission saine de l'effort du dispositif d'absorption de choc vers le nez de brancard n'est pas assurée.

La faiblesse du nez de brancard se traduit par une déformation de la semelle de brancard, allant jusqu'à 6 %, ce qui est plus que ce qui est acceptable (2% maximum).

Le but de l'invention est donc de pallier les inconvénients de l'art antérieur en proposant un brancard pour véhicule automobile comprenant un élément de renfort permettant d'assurer une transmission saine de l'effort du dispositif d'absorption de choc vers le brancard et évitant une déformation de la partie avant du brancard.

Pour ce faire, l'invention se rapporte ainsi, dans son acceptation la plus large, à un brancard pour véhicule automobile comprenant une partie avant tubulaire comportant une platine à une extrémité de la partie avant destinée à se fixer sur un dispositif d'absorption de choc, un premier orifice de déformation formé sur une première paroi de la partie avant et un deuxième orifice de déformation formé sur une deuxième paroi de la partie avant, opposée à la première paroi. La partie avant du brancard loge un élément de renfort s'étendant depuis la platine jusqu'aux orifices de déformation. L'élément de renfort comprend une base de forme tubulaire creuse comportant une première extrémité positionnée en regard de la platine.

Selon l'invention, la base de l'élément de renfort est prolongée par une première zone d'extension et par une deuxième zone d'extension, positionnées l'une en regard de l'autre, et s'étendant vers une direction opposée à la première extrémité de la base. Les zones d'extension longent chacune à la fois une première bordure périphérique délimitant le premier orifice de déformation et une deuxième bordure périphérique délimitant le deuxième orifice de déformation, de façon à ne pas masquer les orifices de déformation.

L'invention fournit ainsi un brancard pour véhicule automobile comprenant un élément de renfort qui n'est plus limité à la partie avant du brancard, ce qui évite au brancard de plier lors d'un choc avant.

La transmission saine de l'effort du dispositif d'absorption de choc vers le brancard est assurée. Cela permet d'éviter une déformation de la partie avant du brancard et en particulier lors de chocs réalisés jusqu'à une vitesse de km/h contre une barrière rigide inclinée de 10° et avec un recouvrement de 40 % et pour des véhicules présentant une masse supérieure à 1500 kg.

L'invention fournit une tenue de brancard irréprochable afin d'assurer cette continuité de transmission d'effort.

L'élément de renfort permet d'éviter la déformation de la semelle de brancard et permet au véhicule d'être réparé à des coûts raisonnables.

Selon une variante, la base de l'élément de renfort présente une section de forme générale quadrilatérale. Les zones d'extension présentent une section avec une forme générale en U.

Cette solution est simple est facile à mettre en oeuvre.

Selon une autre variante, les deux zones d'extension sont agencées l'une en face de l'autre de façon à former une première ouverture et une deuxième ouverture, opposées l'une par rapport à l'autre. Les deux orifices de déformation sont positionnés l'un en face de l'autre. Les deux ouvertures de l'élément de renfort sont positionnées au moins partiellement en regard des deux orifices de déformation, de façon à ne pas obturer les orifices de déformation.

Ceci permet de conserver la capacité de déformation des orifices de déformation.

Selon une autre variante, la première zone d'extension comprend une première paroi principale prolongeant une première paroi de la base de l'élément de renfort suivant une direction longitudinale. La première paroi principale est prolongée par une première portion latérale et une deuxième portion latérale suivant une direction perpendiculaire à la direction longitudinale. La deuxième zone d'extension comprend une deuxième paroi principale prolongeant une deuxième paroi de la base, opposée à la première paroi de la base. La deuxième paroi principale est prolongée par une troisième portion latérale et une quatrième portion latérale suivant une direction perpendiculaire à la direction longitudinale.

La première paroi principale, la première portion latérale et la deuxième portion latérale délimitent la première ouverture de l'élément de renfort. La deuxième paroi principale, la troisième portion latérale et la quatrième portion latérale délimitent la deuxième ouverture de l'élément de renfort.

Selon un premier mode de réalisation, chaque ouverture présente une forme générale en U.

Ceci fournit un élément de renfort de conception simple mais efficace pour éviter le pli du brancard.

De préférence, la première portion latérale comprend une première bordure parallèle à une deuxième bordure de la troisième portion latérale. Les première et deuxième bordures sont perpendiculaires à une première bordure principale de la base. La deuxième portion latérale comprend une troisième bordure parallèle à une quatrième bordure de la quatrième portion latérale. Les troisième et quatrième bordures sont perpendiculaires à une deuxième bordure principale de la base.

Selon une autre variante, chaque orifice de déformation présente une forme oblongue et est positionné transversalement sur la partie avant du brancard. Les première et deuxième bordures sont opposées. La première bordure longe une première extrémité transversale d'un premier orifice de déformation. La deuxième bordure longe une deuxième extrémité transversale du premier orifice de déformation. Les troisième et quatrième bordures sont opposées. La troisième bordure longe une troisième extrémité transversale d'un deuxième orifice de déformation. La quatrième bordure longe une quatrième extrémité transversale du deuxième orifice de déformation.

Selon une autre variante, la première bordure principale de la base s'étend au-delà d'une première bordure longitudinale du premier orifice de déformation. La deuxième bordure principale de la base s'étend au-delà d'une deuxième bordure longitudinale du deuxième orifice de déformation. Les première et deuxième zones d'extension s'étendent jusqu'à au moins une troisième bordure longitudinale du premier orifice de déformation et une quatrième bordure longitudinale du deuxième orifice de déformation.

Cette solution fournit une meilleure continuité de transmission d'effort.

Selon un deuxième mode de réalisation, les première et deuxième zones d'extension entourent partiellement les orifices de déformation.

Cette solution améliore davantage la continuité de transmission d'effort.

L'invention concerne également un véhicule comprenant un brancard tel que défini précédemment.

On décrira ci-après, à titre d'exemples non limitatifs, des formes d'exécution de la présente invention, en référence aux figures annexées sur lesquelles :
[Fig.1] illustre schématiquement une vue de dessus d'une partie avant d'un brancard, selon un premier mode de réalisation de l'invention ;
[Fig.2] illustre schématiquement une vue en transparence du brancard de la figure 1 ;
[Fig.3] illustre schématiquement une vue détaillée d'un élément de renfort du brancard de la figure 1 ;
[Fig.4] illustre schématiquement une vue en transparence d'une partie avant d'un brancard, selon un deuxième mode de réalisation de l'invention ;
[Fig.5] illustre schématiquement une vue détaillée d'un élément de renfort du brancard de la figure 4.

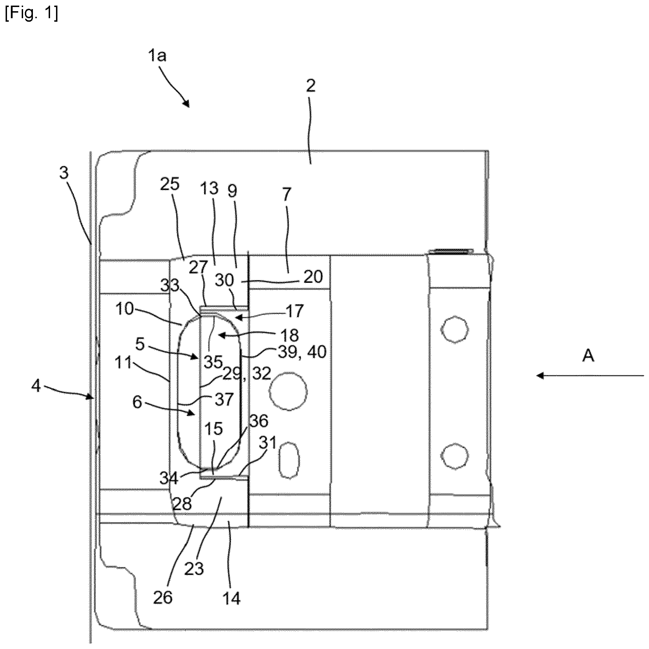

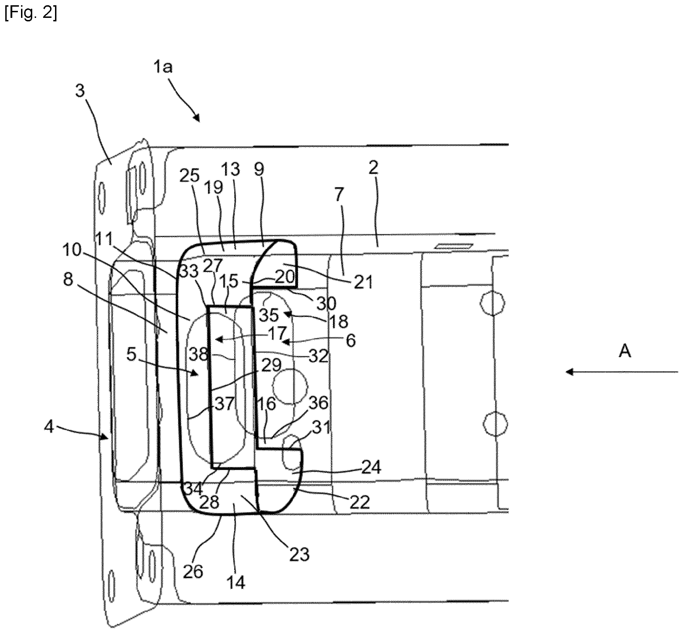

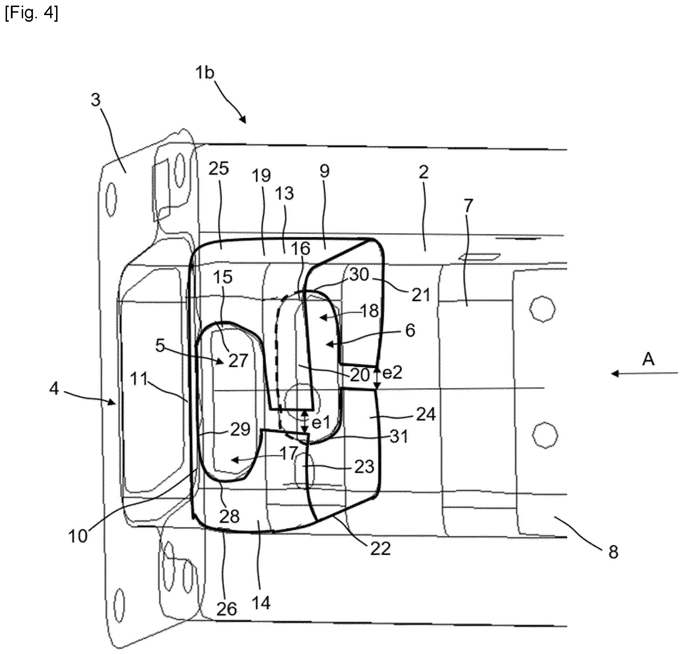

Les figures 1 et 2 illustrent une partie avant 2 d'un brancard 1a de véhicule, selon un premier mode de réalisation de l'invention. La figure 4 illustre une partie avant 2 d'un brancard 1b, selon un deuxième mode de réalisation de l'invention.

Le véhicule comprend deux brancards 1a, 1b à l'avant dont un brancard 1a, 1b disposé à droite et un autre brancard 1a, 1b disposé à gauche.

La partie avant 2 du brancard 1a, 1b est métallique, tubulaire, creuse et comporte une platine 3 à une extrémité 4, destinée à se fixer sur un dispositif d'absorption de choc (non illustré).

Les brancards 1a, 1b sont liés, généralement par soudage, à l'habitacle du véhicule.

Les brancards 1a, 1b sont disposés parallèlement à une direction longitudinale A du véhicule, de part et d'autre d'une zone centrale dans laquelle est généralement disposé un groupe motopropulseur (non illustré).

Un premier orifice de déformation 5 est formé sur une première paroi 7 de la partie avant 2 du brancard 1a, 1b et un deuxième orifice de déformation 6 est formé sur une deuxième paroi 8 de la partie avant 2, opposée à la première paroi 7. Les premier et deuxième orifices de déformation 5, 6 sont donc opposés et positionnés en regard l'un de l'autre.

Les premier et deuxième orifices de déformation 5, 6 sont des découpes réalisées sur la partie avant 2 du brancard 1a, 1b pour favoriser la déformation par compression du brancard 1a, 1b, lors d'un choc selon la direction longitudinale A.

De par leurs formes et leurs dimensions, en cas de choc, les premier et deuxième orifices de déformation 5, 6 sont agencés pour se déformer.

De préférence, les premier et deuxième orifices de déformation 5, 6 présentent une forme oblongue et sont disposés transversalement sur la partie avant 2 du brancard 1a, 1b. Les premier et deuxième orifices de déformation 5, 6 présentent une longueur plus importante que leur largeur. Les premier et deuxième orifices de déformation 5, 6 sont positionnés de façon que leur direction longitudinale dans le sens de leur longueur soit perpendiculaire à la direction longitudinale A du brancard 1a, 1b.

Par exemple, la longueur des premier et deuxième orifices de déformation 5, 6 peut être comprise entre 20 et 70 mm et leur largeur peut être comprise entre 10 et 30 mm.

Les premier et deuxième orifices de déformation 5, 6 peuvent, par exemple, être réalisés par poinçonnage du brancard 1a, 1b.

Un élément de renfort 9 s'étendant depuis la platine 3 jusqu'aux orifices de déformation 5, 6 est logé à l'intérieur de la partie avant 2 du brancard 1a, 1b. L'élément de renfort 9 comprend une base 10 de forme tubulaire creuse comportant une première extrémité 11 positionnée en regard de la platine 3.

L'élément de renfort 9 est soudé sur la platine 3 avec des cordons de soudure et sur le brancard 1a, 1b avec des points de soudure électrique, par exemple.

Selon l'invention, la base 10 de l'élément de renfort 9 est prolongée par une première zone d'extension 13 et par une deuxième zone d'extension 14, positionnées l'une en regard de l'autre, et s'étendant vers une direction opposée à la première extrémité 11 de la base 10, c'est-à-dire vers la direction longitudinale A.

Le premier orifice de déformation 5 est délimité et entouré par une première bordure périphérique 15. Le deuxième orifice de déformation 6 est délimité et entouré par une deuxième bordure périphérique 16.

Les zones d'extension 13, 14 longent les deux bordures périphériques 15, 16 à la fois de façon à ne pas masquer les orifices de déformation 5, 6. Plus précisément, les zones d'extension 13, 14 longent une première surface interne de la première paroi 7 de la partie avant 2 du brancard 1a, 1b et une deuxième surface interne de la deuxième paroi 8 de la partie avant 2 du brancard 1a, 1b.

La base 10 de l'élément de renfort 9 présente une section de forme générale quadrilatérale. Les zones d'extension 13, 14 présentant une section avec une forme générale en U.

Les zones d'extension 13, 14 sont identiques et symétriques par rapport à un plan central de l'élément de renfort 9.

Les deux zones d'extension 13, 14 sont agencées l'une en face de l'autre de façon à former une première ouverture 17 et une deuxième ouverture 18, opposées l'une par rapport à l'autre. Les deux ouvertures 17, 18 de l'élément de renfort 9 sont positionnées au moins partiellement en regard des deux orifices de déformation 5, 6 de façon à ne pas les obturer.

Les deux ouvertures 17, 18 de l'élément de renfort 9 peuvent obturer partiellement les deux orifices de déformation 5, 6 mais pas totalement.

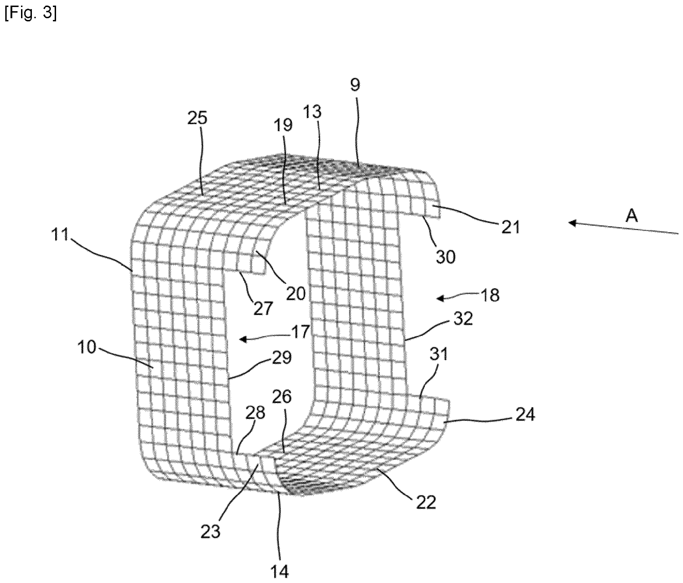

Comme illustré sur la figure 3, la première zone d'extension 13 comprend une première paroi principale 19 prolongeant une première paroi 25 de la base 10 de l'élément de renfort 9 suivant la direction longitudinale A. La première paroi principale 19 est prolongée par une première portion latérale 20 et une deuxième portion latérale 21 suivant une direction perpendiculaire à la direction longitudinale A.

De même, la deuxième zone d'extension 14 comprend une deuxième paroi principale 22 prolongeant une deuxième paroi 26 de la base 10, opposée à la première paroi 25 de la base 10. La deuxième paroi principale 22 est prolongée par une troisième portion latérale 23 et une quatrième portion latérale 24 suivant une direction perpendiculaire à la direction longitudinale A.

La première paroi principale 19, la première portion latérale 20 et la deuxième portion latérale 21 délimitent la première ouverture 17 de l'élément de renfort 9. La deuxième paroi principale 22, la troisième portion latérale 23 et la quatrième portion latérale 24 délimitent la deuxième ouverture 18 de l'élément de renfort 9.

Selon le premier mode de réalisation des figures 1 à 3, chaque ouverture 17, 18 présente une forme générale en U.

La première portion latérale 20 comprend une première bordure 27 parallèle à une deuxième bordure 28 de la troisième portion latérale 23, les première et deuxième bordures 27, 28 étant perpendiculaires à une première bordure principale 29 de la base 10. La deuxième portion latérale 21 comprend une troisième bordure 30 parallèle à une quatrième bordure 31 de la quatrième portion latérale 24, les troisième et quatrième bordures 30, 31 étant perpendiculaires à une deuxième bordure principale 32 de la base 10.

Les première et deuxième bordures 27, 28 étant opposées, la première bordure 27 longe une première extrémité transversale 33 du premier orifice de déformation 5. La deuxième bordure 28 longe une deuxième extrémité transversale 34 du premier orifice de déformation 5. Les première et deuxième extrémités transversales 33, 34 sont opposées dans le sens de la longueur du premier orifice de déformation 5.

Les troisième et quatrième bordures 30, 31 étant opposées, la troisième bordure 30 longe une troisième extrémité transversale 35 du deuxième orifice de déformation 6. La quatrième bordure 31 longe une quatrième extrémité transversale 36 du deuxième orifice de déformation 6. Les troisième et deuxième extrémités transversales 35, 36 sont opposées dans le sens de la longueur du deuxième orifice de déformation 6.

De préférence, la première bordure principale 29 de la base 10 s'étend au-delà d'une première bordure longitudinale 37 du premier orifice de déformation 5. La deuxième bordure principale 32 de la base 10 s'étend au-delà d'une deuxième bordure longitudinale 38 du deuxième orifice de déformation 6.

Les première et deuxième zones d'extension 13, 14 s'étendent jusqu'à au moins une troisième bordure longitudinale 39 du premier orifice de déformation 5 et une quatrième bordure longitudinale 40 du deuxième orifice de déformation 6.

Selon une variante, les première et deuxième zones d'extension 13, 14 s'étendent au-delà de la troisième bordure longitudinale 39 du premier orifice de déformation 5 et de la quatrième bordure longitudinale 40 du deuxième orifice de déformation 6.

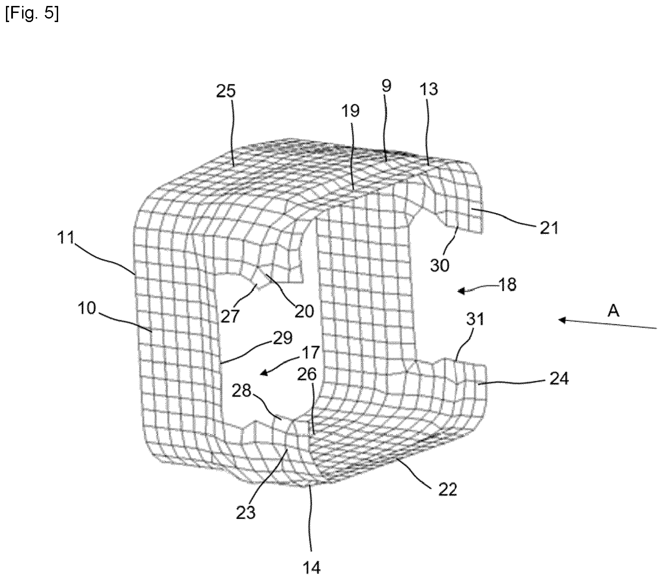

Selon le mode de réalisation des figures 4 et 5, la partie avant 2 du brancard 1b comprend un élément de renfort 9 comportant des première et deuxième zones d'extension 13, 14 qui entourent partiellement les orifices de déformation 5, 6.

La partie avant 2 du brancard 1b est identique à celle illustrée sur les figures 1 à 3. La différence réside dans la forme des première et deuxième zones d'extension 13, 14 qui englobent davantage les orifices de déformation 5, 6 ou plus précisément les bordures périphériques 15, 16 délimitant les orifices de déformation 5, 6.

La première zone d'extension 13 comprend une première paroi principale 19 prolongeant une première paroi 25 de la base 10 de l'élément de renfort 9 suivant une direction longitudinale A. La première paroi principale 19 est prolongée par une première portion latérale 20 et une deuxième portion latérale 21 suivant une direction perpendiculaire à la direction longitudinale A. La deuxième zone d'extension 14 comprend une deuxième paroi principale 22 prolongeant une deuxième paroi 26 de la base 10, opposée à la première paroi 25 de la base 10. La deuxième paroi principale 22 est prolongée par une troisième portion latérale 23 et une quatrième portion latérale 24 suivant une direction perpendiculaire à la direction longitudinale A.

La première portion latérale 20 et la troisième portion latérale 23 longent le premier orifice de déformation 5 de façon à former une première ouverture 17 présentant une forme similaire au premier orifice de déformation 5 et alignée avec le premier orifice de déformation 5 pour ne pas le masquer complètement.

La deuxième portion latérale 21 et la quatrième portion latérale 24 longent le deuxième orifice de déformation 6 de façon à former une deuxième ouverture 18 présentant une forme similaire au deuxième orifice de déformation 6 et alignée avec le deuxième orifice de déformation 6 pour ne pas le masquer complètement.

Selon une variante, la première portion latérale 20 et la troisième portion latérale 23 contournent le premier orifice de déformation 5 de façon à ne pas le masquer du tout. La deuxième portion latérale 21 et la quatrième portion latérale 24 contournent le deuxième orifice de déformation 6 de façon à ne pas le masquer du tout.

Selon une autre variante, la première portion latérale 20 et la troisième portion latérale 23 longent le premier orifice de déformation 5 en débordant légèrement vers le premier orifice de déformation 5 de façon à le masquer partiellement.

La deuxième portion latérale 21 et la quatrième portion latérale 24 longent le deuxième orifice de déformation 6 en débordant légèrement vers le deuxième orifice de déformation 6 de façon à le masquer partiellement.

Par rapport au premier mode de réalisation, la première portion latérale 20 et la troisième portion latérale 23 sont davantage rapprochées. Un espace e1 est formé entre la première portion latérale 20 et la troisième portion latérale 23. La deuxième portion latérale 21 et la quatrième portion latérale 24 sont également davantage rapprochées. Un espace e2 est formé entre la deuxième portion latérale 21 et la quatrième portion latérale 24.

Les espaces e1 et e2 peuvent être compris entre 0,5 cm à 2 cm, par exemple.

La première bordure 27 de la première portion latérale 20, la deuxième bordure 28 de la troisième portion latérale 23, la troisième bordure 30 de la deuxième portion latérale 21 et la quatrième bordure 31 de la quatrième portion latérale 24 ne sont pas rectilignes. Elles sont de préférence courbes pour épouser la forme des orifices de déformation 5, 6 qui sont oblongs.

## Revendications

1. Brancard (1a, 1b) pour véhicule automobile comprenant une partie avant (2) tubulaire comportant une platine (3) à une extrémité (4) de la partie avant (2) destinée à se fixer sur un dispositif d'absorption de choc, un premier orifice de déformation (5) formé sur une première paroi (7) de la partie avant (2) et un deuxième orifice de déformation (6) formé sur une deuxième paroi (8) de la partie avant (2), opposée à la première paroi (7), la partie avant (2) du brancard (1a, 1b) logeant un élément de renfort (9) s'étendant depuis la platine (3) jusqu'aux orifices de déformation (5, 6), l'élément de renfort (9) comprenant une base (10) de forme tubulaire creuse comportant une première extrémité (11) positionnée en regard de la platine (3), **caractérisé en ce que** la base (10) de l'élément de renfort (9) est prolongée par une première zone d'extension (13) et par une deuxième zone d'extension (14), positionnées l'une en regard de l'autre, et s'étendant vers une direction opposée à la première extrémité (11) de la base (10), les zones d'extension (13, 14) longeant chacune à la fois une première bordure périphérique (15) délimitant le premier orifice de déformation (5) et une deuxième bordure périphérique (16) délimitant le deuxième orifice de déformation (6), de façon à ne pas masquer les orifices de déformation (5, 6).

2. Brancard (1a, 1b) selon la revendication 1, **caractérisé en ce que** la base (10) de l'élément de renfort (9) présente une section de forme générale quadrilatérale, les zones d'extension (13, 14) présentant une section avec une forme générale en U.

3. Brancard (1a, 1b) selon l'une quelconque des revendications 1 ou 2, **caractérisé en ce que** les deux zones d'extension (13, 14) sont agencées l'une en face de l'autre de façon à former une première ouverture (17) et une deuxième ouverture (18), opposées l'une par rapport à l'autre, les deux orifices de déformation (5, 6) étant positionnés l'un en face de l'autre, les deux ouvertures ( 17, 18) de l'élément de renfort (9) étant positionnées au moins partiellement en regard des deux orifices de déformation (5, 6) de façon à ne pas obturer les orifices de déformation (5, 6).

4. Brancard (1a, 1b) selon l'une quelconque des revendications 1 à 3, **caractérisé en ce que** la première zone d'extension (13) comprend une première paroi principale (19) prolongeant une première paroi (25) de la base (10) de l'élément de renfort (9) suivant une direction longitudinale (A), la première paroi principale (19) étant prolongée par une première portion latérale (20) et une deuxième portion latérale (21) suivant une direction perpendiculaire à la direction longitudinale (A), la deuxième zone d'extension (14) comprenant une deuxième paroi principale (22) prolongeant une deuxième paroi (26) de la base (10), opposée à la première paroi (25) de la base (10), la deuxième paroi principale (22) étant prolongée par une troisième portion latérale (23) et une quatrième portion latérale (24) suivant une direction perpendiculaire à la direction longitudinale (A).

5. Brancard (1a, 1b) selon la revendication 4, **caractérisé en ce que** la première paroi principale (19), la première portion latérale (20) et la deuxième portion latérale (21) délimitent la première ouverture (17) de l'élément de renfort (9), la deuxième paroi principale (22), la troisième portion latérale (23) et la quatrième portion latérale (24) délimitant la deuxième ouverture (18) de l'élément de renfort (9), chaque ouverture (17, 18) présentant une forme générale en U.

6. Brancard (1a, 1b) selon la revendication 5, **caractérisé en ce que** la première portion latérale (20) comprend une première bordure (27) parallèle à une deuxième bordure (28) de la troisième portion latérale (23), les première et deuxième bordures (27, 28) étant perpendiculaires à une première bordure principale (29) de la base (10), la deuxième portion latérale (21) comprenant une troisième bordure (30) parallèle à une quatrième bordure (31) de la quatrième portion latérale (24), les troisième et quatrième bordures (30, 31) étant perpendiculaires à une deuxième bordure principale (32) de la base (10).

7. Brancard (1a, 1b) selon la revendication 6, **caractérisé en ce que** chaque orifice de déformation (5, 6) présente une forme oblongue et est positionné transversalement sur la partie avant (2) du brancard (1a, 1b), les première et deuxième bordures (27, 28) étant opposées, la première bordure (27) longeant une première extrémité transversale (33) d'un premier orifice de déformation (5), la deuxième bordure (28) longeant une deuxième extrémité transversale (34) du premier orifice de déformation (5), les troisième et quatrième bordures (30, 31) étant opposées, la troisième bordure (30) longeant une troisième extrémité transversale (35) d'un deuxième orifice de déformation (6), la quatrième bordure (31) longeant une quatrième extrémité transversale (36) du deuxième orifice de déformation (6).

8. Brancard (1a, 1b) selon l'une quelconque des revendications 6 à 7, **caractérisé en ce que** la première bordure principale (29) de la base (10) s'étend au-delà d'une première bordure longitudinale (37) du premier orifice de déformation (5), la deuxième bordure principale (32) de la base (10) s'étendant au-delà d'une deuxième bordure longitudinale (38) du deuxième orifice de déformation (6), les première et deuxième zones d'extension (13, 14) s'étendant jusqu'à au moins une troisième bordure longitudinale (39) du premier orifice de déformation (5) et une quatrième bordure longitudinale (40) du deuxième orifice de déformation (6).

9. Brancard (1a, 1b) selon l'une quelconque des revendications 1 à 4, **caractérisé en ce que** les première et deuxième zones d'extension (13, 14) entourent partiellement les orifices de déformation (5, 6).

10. Véhicule **caractérisé en ce qu'**il comprend un brancard (1a, 1b) tel que défini selon l'une quelconque des revendications 1 à 9.
